# EUROPÄISCHE PATENTANMELDUNG

(11) **EP 2 030 864 A2**
(43) Veröffentlichungstag der Anmeldung: **04.03.2009**
(21) Anmeldenummer: 08162825.7
(22) Anmeldetag: 22.08.2008
(51) Int. Cl.: B62B 9/12

(54) **Vorderradeinheit für einen Kinderwagen**

(30) Priorität: 28.08.2007 DE 202007011937 U
(71) Anmelder: TFK Trends for Kids GmbH Vertrieb von Kinder-Trend-Artikeln, 84030 Ergolding (DE)
(72) Erfinder: Beger, Udo, 84034 Landshut (DE)
(74) Vertreter: Pröll, Jürgen

(57) **Zusammenfassung**

Die Erfindung betrifft eine Vorderradeinheit für einen Kinderwagen, Kindersportwagen, Puppenwagen und/oder für ein Lasttransportmittel mit am Fahrgestell (1) rückseitig mindestens zwei beabstandet voneinander angeordneten Rädern (2a,2b) und mit vorderseitig einem mindestens zwei Seitenholme (4a,4b) verbindenden Brückenteil (11), an dem die Vorderradeinheit befestigt ist. Das Brückenteil (11) weist zwei zur Mittenlängsachse des Fahrgestells symmetrisch versetzt angeordnete, verschwenkbare Verbindungselemente (12,13) auf, die mit den Holmenden (4a,4b) verbunden sind. Unter Berücksichtigung der Befestigungspunkte ist eine Formschlussverbindung zwischen dem jeweiligen Holmende und dem Verbindungselement über einen definierten Abschnitt gegeben. Alternativ kann am Brückenteil (11) rückseitig mindestens ein Befestigungselement (6a,6b) vorgesehen sein, das kraftschlüssig an einem die Holmenden im Endabschnittsbereich verbindenden Querholm (7) des Fahrgestells (1) lösbar befestigbar ist, wobei Stützpunkte (5a,5b) für die definierte Anlage der Holmenden an dem Brückenteil vorgesehen sind.

## Beschreibung

Die Erfindung betrifft eine Vorderradeinheit für einen Kinderwagen, Kindersportwagen, Puppenwagen und/oder für ein Lasttransportmittel mit am Fahrgestell rückseitig mindestens zwei beabstandet voneinander angeordneten Rädern und mit vorderseitig einem mindestens zwei Seitenholme verbindenden Brückenteil, an dem die Vorderradeinheit befestigt ist.

Aus der US-5,765,856 ist ein dreirädriger Schiebewagen für Kinder bekannt, der Schrägholme aufweist, zwischen denen ein Sitzeinsatz vorgesehen ist und an welchen Stützstreben für hintere Räder angelenkt sind. Die beiden tragenden Schrägholme weisen unten abgewinkelte Teile auf, die an einem waagerechten Verbindungsteil befestigt sind. Dieses Verbindungsteil verläuft gegenüber dem Aufstellboden im Wesentlichen parallel. In der Unterseite des Verbindungsteils ist in einem senkrechten Schwenklager ein Lagerzapfen einer Gabel drehbar gelagert, die an ihren Enden eine Achse für ein zwischengesetztes vorderes Laufrad aufweist. Mit diesem dreirädrigen Schiebewagen kann auf einfache Weise im Bogen gefahren werden. Das Vorderrad richtet sich dabei entsprechend der an den Schrägholmenden am vorgesehenen Schieber ausgeübten Kraft aus. Darüber hinaus sind Mittel vorgesehen, um eine Arretierung des Lagerzapfens vornehmen zu können, damit die Räder in gewünschter Richtung arretiert gehalten werden. Bei dieser Ausführungsform ist das Vorderrad stets als fester Bestandteil am Kinderwagengestell vorgesehen.

Aus der WO 2006/029859 A2 ist ein vierrädriges, zusammenklappbares Kinderwagengestell bekannt, bei dem die Vorderräder an Haltern befestigt sind, die Verbindungselemente aufweisen, mit denen die Halter in die unteren Längsholme vorderseitig eingesteckt und darin arretiert werden können. Dadurch ist es möglich, ein Einzelrad beispielsweise durch eine Radanordnung zu ersetzen, deren Räder um eine senkrechte Achse verschwenkbar gelagert sind.

Aus der DE 20 2005 008 298 U1 ist ein Kinderwagengestell bekannt, das eine Vorderachse aufweist, auf der seitlich Räder aufsteckbar sind, die mittels Querschieber in die Nuten an den Enden der Achse eingreifen und gesichert gehalten sind. Diese Räder können auf einfache Weise entfernt und auf die Achsenstummel ein Halter aufgesteckt werden, der zusätzlich am Längsholm fixiert ist. An diesem Halter können Radanordnungen mit senkrechter Drehachse befestigt sein, so dass auch hierüber eine bogenförmige Bewegung des Fahrgestells möglich ist.

Aus der DE 20 2005 014 398 U1 ist ein Fahrgestell für einen Kinder- oder Puppenwagen bekannt, das schwenkbeweglich gelagerte Vorderräder aufweist, die über Verbindungselemente um eine horizontale Achse schwenkbeweglich an einem Gestellhalter befestigt sind.

Aus der DE 20 2004 014 685 U1 ist eine Vorderradeinheit für einen dreirädrigen Kinderwagen mit einem in horizontale Richtung schwenkbaren Vorrad bekannt, das in einer Gabel drehbar gelagert ist. An der Gabelbrücke ist ein nach oben sich erstreckender Lagerbolzen vorgesehen, der durch einen Nabenkörper hindurch steckbar ist und in eine Arretierungseinrichtung eingreift. Die Arretierungseinrichtung dient zur lösbaren Aufnahme des Lagerbolzens. Die Arretierungseinrichtung weist eine in den Nabenkörper einführbare geschlitzte Lagerhülse zur Aufnahme des Lagerbolzens auf. Die Achse weist eine ringförmige Sicherungsnut auf, in die ein Arretierelement querverlaufend einschiebbar ist. Dieses Arretierelement steht mit einem Steuerglied in Form eines Druckknopfes in Wirkverbindung. Das Arretierelement ist in der Lagerhülse in einem Lagerschlitz gelagert. Das Steuerglied weist mindestens eine Steuerkurve für das Arretierungselement auf, wobei die Steuerkurve derart ausgebildet ist, dass bei axialer Bewegung des Steuergliedes, relativ zur Lagerhülse, durch die Steuerkurve das Arretierglied in die Sicherungsnut des Lagerbolzens einbringbar ist, so dass der Lagerbolzen gesichert gehalten ist. Zum Lösen der Verbindung wird auf den Druckknopf gedrückt, wodurch das Steuerglied das Arretierungselement aus der Sicherungsnut im Lagerbolzen herausdrückt und der Lagerbolzen aus der durchgehenden Aufnahme herausgezogen werden kann.

Aus der DE 200 17 916 U1 ist es zur Umwandlung eines vierrädrigen Schiebewagens in einen dreirädrigen Schiebewagen bekannt, an der Achse der vorderen Räder jeweils einen sich nach vorne erstreckenden Träger mittels Befestigungseinrichtung lösbar zu befestigen, an dem ein Vorderrad in einer Gabel angeordnet ist.

Aus der US 2002/0066156 A1 ist ein Kinderwagengestell bekannt, das vorderseitig zwei parallele Schrägholme aufweist, an deren abgewinkelten Enden anstelle des zwischen dieser Gabel eingefügten Einzelrades ein Brückenelement befestigt ist, an dem seitlich Rollenpaare um eine senkrechte Achse schwenkbar gelagert vorgesehen sind. Die bekannten verschwenkbaren Radanordnungen lassen sich ebenfalls feststellen.

Eine ähnliche austauschbare Einrichtung ist aus der US 6,443,467 B1 bekannt. Das Brückenteil weist dabei vorstehende Verbindungselemente auf, die in Halter, die an den Längsholmen eines Fahrgestells befestigt sind, eingeschoben werden und dort mittels Federrasten gesichert gehalten sind. Hierdurch ist es möglich, ein zwischen einer Gabel angeordnetes Einzelrad durch ein Brückenelement mit zwei seitlichen Radpaaren zu ersetzen. Diese Radpaare weisen eine senkrechte Drehachse auf, die vor bzw. hinter der horizontalen Drehachse der Räder liegt, so dass sowohl eine zwangsweise Drehung der Räder als auch eine Drehung der vertikalen Achse beim Bogenfahren gegeben ist. Auch weisen die über die senkrechte Achse an dem Brückenteil befestigten Halter der Radanordnungen Feststellmöglichkeiten auf, um eine gerade Ausrichtung der Radpaare zu gestatten. Die Sicherung erfolgt auch hier beispielsweise durch Einsetzen eines Sicherungsstiftes in eine Querbohrung.

Weiterhin ist aus der DE 201 09 129 U1 ein dreirädriger Kinderlaufwagen bekannt, bei dem in einer gabelförmigen unteren Holmanordnung ein Einzelrad zwischengefügt und an den seitlichen gabelförmigen Aufnahmen mittels Schraubverbinder befestigt ist. Dieses Vorderrad kann ausgetauscht werden durch einen Einsatz, der aufgesteckt wird und eine um eine senkrechte Achse verschwenkbare Gabel zur Aufnahme des Rades aufweist.

Aus der DE 20 2004 014 531 U1 ist ein zusammenlegbarer dreirädriger Schiebewagen mit unteren Längsträgern und schräg verlaufenden Holmen bekannt, bei dem die schräg verlaufenden Holme an den unteren Längsträgern vorderseitig angelenkt und die Längsträger an einem Brückenelement ihrerseits um senkrechte Achsen verschwenkbar angeordnet sind, so dass beim Zusammenlegen des Gestells dieses sowohl in der Höhe als auch in der Breite zusammenlegbar ist. Zwischen dem Brückenteil ist das Vorderrad vorgesehen.

Aus der DE 20 2004 020 186 U1 ist ferner ein Fahrgestell bekannt, bei dem an den unteren, verschwenkbar in einem Befestigungskopf befestigten Enden eines Holmes ausstellbar eine Radanordnung mit einem Halter mit senkrechter Drehachse vorgesehen ist.

Aus der EP 1 366 968 B1 ist ein zusammenklappbarer Schiebewagen für Kinder und/oder Puppen mit einem Wagengestell bekannt, bei dem die unteren Längsholme und die schräg nach oben verlaufenden Längsholme über ein Verbindungsteil miteinander verbunden sind, in das stirnseitig ein Verbindungselement an einem Halter einer Radanordnung einsteckbar ist.

Aus der EP 1 231 126 A2 ist ein Kinder- und/oder Puppenwagengestell mit zwei gabelförmig angeordneten unteren Holmen bekannt, an deren Enden Gabelaufnahmen für die Lagerung eines Rades vorgesehen sind. Die beiden gabelförmig angeordneten Holme sind über einen Querholm miteinander verbunden, an den ein Wechselradeinsatz angebracht werden kann, der eine Radanordnung aufweist, die um eine am freien Ende vorgesehene, im Wesentlichen senkrechte Achse an der an dem Querholm anschraubbaren Stange befestigt ist. Diese Stange ist durch einen Querverbinder an der Gabelaufnahme fixiert.

Aus der DE 201 16 217 U1 ist ein Fahrgestell für einen Kinderwagen mit einer Radmontageeinheit bekannt, bei der die Schrägholme untenseitig über ein Brückenteil miteinander verbunden sind. An dem Brückenteil sind zwei gabelförmig abstehende Montagerohre angebracht, mit deren Enden entweder Halter für ein Einzelrad oder ein Trägerelement für eine Doppelradanordnung mit seitlichen Rädern verbunden ist.

Aus der DE 20 2006 014 197 U1 ist ein Kinderwagenfahrgestell bekannt, bei dem die Seitenholme über ein Brückenelement miteinander untenseitig verbunden sind. An diesem Brückenelement befindet sich eine Aufnahmevorrichtung für eine Vorderradanordnung oder für einen Brückenträger, an deren Enden um vertikale Achsen drehbar gelagerte Einzelvorderräder vorgesehen sind.

Ausgehend vom Stand der Technik liegt der Erfindung die Aufgabe zugrunde, eine Vorderradeinheit derart weiter zu entwickeln, dass diese auch an nicht geraden Holmen eines Fahrgestells, beispielsweise an parabelförmig verlaufenden Holmen mit oval nach innen gebogenen Enden auf einfache Art und Weise montiert werden kann und darüber hinaus anstelle einer einrädrigen Vorderradeinheit auch eine solche mit zwei oder drei Ein- oder Zweiradanordnungen auf einfache Weise montiert werden kann und möglichst gleiche Elemente zur Befestigung der Radanordnungen verwendet werden können.

Die Erfindung löst die Aufgabe durch Ausgestaltung der Vorderradeinheit gemäß der im Anspruch 1 angegebenen Lehre.

Der Anspruch 1 gibt im kennzeichnenden Teil zwei alternative Lösungen an, die auch miteinander gemeinsam realisierbar sind. Gemäß der einen Alternative ist das Brückenteil über zwei zur Mittenlängsachse des Fahrgestells symmetrisch versetzt angeordnete, um Achsen verschwenkbare Verbindungselemente mit den Holmenden der Holmanordnung, vorzugsweise der seitlichen Schrägholmanordnung verbunden, wobei die Achsen der verschwenkbaren Verbindungselemente in einem bestimmten Winkel quer oder senkrecht zu den Holmenden verlaufen. Wenn beispielsweise die Holmenden sowohl nach innen gebogen ausgeführt und nach vorn ebenfalls gebogen sind, so versteht es sich von selbst, dass dann ein dieser Form angepasstes Verbindungselement vorgesehen sein muss, z.B. ein angepasst geformtes Verbindungselement, um einen Formschluss herzustellen bzw. anzuliegen. Unter Berücksichtigung dessen ist auch die Schwenkachse so vorzusehen, dass durch Anschwenken ein Formschluss hergestellt wird. Die Schwenkachse kann deshalb im Wesentlichen quer oder senkrecht angeordnet sein, sie kann aber auch in einem bestimmten Winkel zu den Holmenden angeordnet sein, um dieses Erfordernis zu erfüllen. Der Winkel der Achse des Verbindungselementes ist also unter Berücksichtigung der Befestigungspunkte zur Bildung einer Formschlussverbindung zwischen dem jeweiligen Holmende und dem Verbindungselement festzulegen. Die Schwenkachse kann auch direkt am Brückenteil vorgesehen sein oder an einer Arretierungseinrichtung, wenn diese fest an dem Brückenteil befestigt ist und von unten eine zugängliche Aufnahme aufweist, in die der Lagerbolzen an dem Brückenteil einer Gabel bzw. einem Radhalter einer Radanordnung einsteckbar ist.

In der Arretierungseinrichtung sind an sich bekannte Mittel zur Fixierung vorgesehen, wie sie eingangs bereits ausführlich anhand des Standes der Technik dargestellt worden sind. Es können hier aber auch vereinfachte Formen zum Einsatz kommen, wie sie bei den Radbefestigungen von abnehmbaren Rädern an Kinderwagen schlechthin bekannt sind. Solche einfachen Arretierungseinrichtungen weisen einen Querschieber auf, der gegen eine Feder verschiebbar ist und einen Arretierungsabschnitt und einen Nicht-Arretierungsabschnitt aufweist, so dass bei einer gegen die Federwirkung ausgeübten Kraft auf den Schieber dieser außer Eingriff mit der ringförmigen Befestigungsnut am Lagerbolzen tritt. In diesem Zustand kann dann der Lagerbolzen des Radhalters aus der Ausnehmung herausgezogen werden.

In der Alternative ist vorgesehen, dass am Brückenteil rückseitig mindestens ein Befestigungselement vorgesehen ist, das kraftschlüssig an einem, die Holmenden im Endabschnittsbereich verbindenden Querholm des Fahrgestells lösbar befestigbar ist. Diese Alternative kann auch mit der erstgenannten Alternative kombiniert werden, so dass ein zusätzliches Sicherungselement für die Verbindung entsteht. Gemäß der Alternative ist eine unmittelbare Befestigung des Brückenelementes an einem Querholm vorgesehen, gleich ob dieses rahmen- oder plattenförmig ausgeführt ist oder als Kunststoffspritzteil eine bestimmte Form mit Aufnahmen aufweist, um z.B. die Radanordnungen befestigen zu können. Es ist ersichtlich, dass durch diese Befestigungsart, bei der die Holmenden nur an dem Brückenteil anliegen bzw. diese nur ausgerichtet fixiert sind, jedwede Endform an den Holmen vorhanden sein kann und dennoch ein sicherer Halt gegeben ist, da die Befestigung selbst über den Querholm und mit den Befestigungsmitteln an dem Brückenteil erfolgt. Dies eröffnet dem Konstrukteur und Designer einen höheren Freiheitsgrad in der Gestaltung der Vorderradeinheiten. Diese kann eine Einzelradeinheit sein, die in einer starren Gabel angeordnet ist. Die Radanordnung kann aber auch in bekannter Weise eine um eine vertikale Achse verschwenkbare Radanordnung sein, wie sie beim Buggy und bei anderen Kindersportwagen üblich oder auch aus dem Möbelbereich bekannt ist. Bei den Rädern können Einzelräder oder Zwillingsräder verwendet werden. Die Radanordnungen können darüber hinaus in bekannter Weise Feststellbremsen aufweisen. Die Erfindung ermöglicht darüber hinaus auch den Austausch eines Brückenteils, an dem nur eine Radanordnung vorhanden ist, gegen ein Brückenteil mit zwei seitlichen oder mit drei Radanordnungen in Reihe. Dies liegt im Belieben des Fachmannes.

Das vorgesehene Brückenteil trägt die eine oder mehreren Radanordnungen, die über lös-, steck- und/oder dreh-, spann- oder arretierbare Kupplungen befestigbar sind. Diese bestehen in bekannter Weise aus einem gabelförmigen Radhalter mit einem am Kopfteil vorstehenden Lagerbolzen, der gegenüber der horizontalen Achse des Rades vorverlagert ist, um so ein Kurvenfahren zu ermöglichen. Diese Konstruktion ist z. B. auch bei Möbelrollen, Buggys und Puppenwagen bekannt. Die seitlichen Schenkel tragen die Achse, auf der das Rad oder die Räder drehbar gelagert sind. Das Kopfteil ist zweckmäßigerweise als Scheibe ausgeführt, die vor dem nach oben stehenden Lagerzapfen eine Bohrung aufweist, in die ein an der Arretierungseinrichtung vorgesehener, in der Höhe verschiebbarer Blockierzapfen bei achsparalleler Ausrichtung der Räder zur Längsachse des Wagengestells zum Blockieren gegen Drehen hineingeschoben werden kann. Die Vorderradeinheit kann einen scheibenförmigen Träger als Kopfteil aufweisen, an dem seitlich nach unten und schräg oder gebogen nach hinten verlaufende Schenkel einer Gabel des Radhalters angebracht sind, an der eine Mehrradanordnung befestigbar ist. In dem Träger ist mindestens eine Bohrung eingebracht, in die ein Arretierungszapfen oder ein Arretierungsschieber, der in der Arretiereinrichtung oder am Brückenteil höhenverstellbar gelagert ist, bei gerader paralleler Ausrichtung der Räder zur Längsachse des Fahrgestells arretierend einschiebbar und zur Kurvenmitführung der Radanordnung ausrückbar ist.

Das Brückenteil kann eine einzige Bohrung aufweisen, durch die der Lagerbolzen an einem Radhalter nach oben durchgesteckt wird. Dieser Lagerbolzen wird in einer Arretierungseinrichtung, die obenseitig am Brückenteil vorgesehen ist, gesichert gehalten. Zu diesem Zweck weist der Lagerbolzen eine ringförmige Sicherungsausnehmung auf, in die ein in der Arretierungseinrichtung gelagerter, tangential zum Lagerbolzen angeordneter Arretierungsstab oder eine Feder eingreift, die durch eine Druckknopfmechanik oder Schiebermechanik im Bedarfsfall aus der ringförmigen Sicherungsausnehmung herausgedrückt wird, um das Radlager abnehmen zu können. Die Druckknopfmechanik besteht z. B. aus ineinandergesetzten Hülsen, die in die zentrische Aufnahme in dem Gehäuse der Arretierungseinrichtung von oben eingesetzt und darin verankert sind. Die Hülse mit dem Druckknopf ist gegenüber der anderen Hülse durch Druck von oben verschiebbar gelagert, um das Ausrenken des Sicherungsstabes oder der Feder zu ermöglichen. Solche Konstruktionen sind an sich bekannt. Es können anstelle solcher Druckknopfkonstruktionen auch quer zum Lagerbolzen in der Arretierungseinrichtung verschiebbar gelagerte Schieber vorgesehen sein, die gegen die Kraft einer Feder verschiebbar sind und mit einer Sperrkante in die ringförmige Sicherungsausnehmung am Lagerbolzen eingreifen und durch Druck aus dieser entfernt werden können. Solche Befestigungen sind bei den Rädern von vierrädrigen Kinderwagen üblich. Das Brückenteil ermöglicht darüber hinaus aber auch die Anbringung von zwei seitlichen Radlagerhaltern in gleicher Weise oder aber auch von drei Radlagerhaltern. Es liegt also im Belieben des Fachmanns, das Brückenelement wahlweise zu bestücken. Die Befestigung an den Holmenpaaren des Wagengestells, z. B. an den Schrägholmen des Wagengestells, erfolgt über die entweder am Brückenelement selbst oder an den Arretierungseinrichtungen schwenkbar gelagerten Verbindungselemente. Diese Verbindungselemente stellen gewissermaßen Verlängerungen zu den Holmenden dar. Sie können so ausgebildet sein, dass sie in die Holmenden einschiebbar sind. In diesem Fall sind entsprechende Rastmittel vorzusehen, um die Verbindungselemente rastend an den Holmenden zu halten. Sie können auch hülsenförmig ausgeführt sein und auf die Holmenden aufgeschoben werden. Ebenso ist anstelle von Rastverbindungen eine Schraubverbindung zur Sicherung einsetzbar.

Besonders vorteilhaft hat es sich erwiesen, wenn die Verbindungselemente runde Elemente oder auch Profilelemente sind, die nur eine äußere oder innere Profilschale zum Formschluss aufweisen. Hiermit ist es möglich, auf einfache Weise das Verbindungselement auch dann an ein Holmende anzufügen, wenn dieses nach innen oder nach außen im Endbereich ausgeformt ist. Die Schwenkachse des Verbindungselementes ist dabei so gestellt, dass der gewünschte Formschluss hergestellt werden kann. Das Verbindungselement wird an die Holmenden angeschraubt oder mit schellenförmigen Sicherungselementen daran gesichert gehalten. Die Schwenkachsen sollten im Wesentlichen quer oder senkrecht zu den Holmenden verlaufend vorgesehen sein, um beispielsweise eine seitliche Anfügung oder eine Anfügung von unten oder von oben zu ermöglichen. Die Schwenkachsen müssen also einen Bezug auf die Ausführung der Holmenden aufweisen, um eine Fügeverbindung in gewünschter Weise herstellen zu können. Die Schwenkachse kann dabei in eine Ausnehmung in der Arretierungseinrichtung versenkt angeordnet sein, so dass die Verbindungselemente nur um einen bestimmten Winkel verschwenkbar sind.

Weist das Fahrgestell vier Holmenden auf, so können jeweils zwei Verbindungselemente in einem Bereich des Brückenelementes oder an einer Arretierungseinrichtung vorgesehen sein, um in gewünschter Weise die Verbindung hiermit herzustellen. Die Holme können dabei Schrägholme sein oder auch Horizontalholme, die untenseitig im Fahrgestell zur Verstärkung desselben vorgesehen sind. Auch ist es in diesem Fall empfehlenswert, die Schwenkachsen gegeneinander verkreuzt anzubringen, um einen geringen Platzbedarf hierfür zu benötigen. Die angegebene Konstruktion ermöglicht nicht nur die wahlweise Anbringung von einzelnen Rädern oder mehreren Vorderrädern. Sie ist darüber hinaus auch nicht nur auf Kinderwagen oder Kindersportwagen anwendbar, sondern generell für Fahrgestelle, einschließlich solcher für Lasttransportmittel. Das Brückenteil kann aber auch an einem Verbindungsteil befestigt sein, das seinerseits mit den Holmenden verbindbar ist. Das Brückenteil ist dann mit den Verbindungselementen an den seitlichen Holmen des Verbindungsteils befestigt, das seinerseits beispielsweise über einen Verschlussmechanismus mit den Querverbindungsstäben an den Holmen verbindbar ist.

Das Fahrgestell kann mindestens zwei schrägverlaufende Holme mit nach innen eingezogenen Enden und/oder horizontale Holme aufweisen, wobei der verbindende Schiebebügel oder der geteilte Schiebebügel in Richtung des Einsatzes, z. B. eines Sitzes, eingezogen ist. Neben dem Handgriff kann an einer Schiebestange oder am Schiebebügel auch ein Bremshebel montiert sein. Ebenso können der oder die Querholme zwischen den Schrägholmen starr oder geteilt und die Teile miteinander mittig über Rastelemente verbindbar ausgeführt sein, so dass das Fahrgestell um die Längsachse entweder klappbar oder nicht klappbar ist. Bei klappbarer Ausführung ist die Radeinheit erst nach dem Aufstellen des Fahrgestells befestigbar und dient gleichzeitig als Aufstellsicherung.

Die Gehäuse der Arretierungseinrichtung können auf einfache Weise am Brückenteil angeschraubt werden. Sie können aber auch, wenn sie aus Kunststoff gefertigt sind, Rastnasen aufweisen, mit denen das Gehäuse über entsprechende Durchgangsöffnungen in dem Brückenteil rastend gehalten wird.

Die vorteilhaften Ausgestaltungsformen der Erfindung sind in den Unteransprüchen im Detail angegeben.

Die Erfindung wird nachfolgend anhand der in den Zeichnungen dargestellten Ausführungsbeispiele ergänzend erläutert.

In den Zeichnungen zeigen:
- FIG 1: ein Kindersportwagengestell mit einer erfin- dungsgemäß ausgebildeten Vorderradeinheit fest- montiert,
- FIG 2: ein weiteres Beispiel eines Kindersportwagen- gestells mit einer anderen Ausführung einer Vorderradeinheit,
- FIG 3: eine Darstellung der Schrägholmanordnung eines Kinderwagengestells nach den FIG 1 und 2,
- FIG 4: eine Draufsicht auf die in FIG 3 dargestellte Schrägholmanordnung zur Verdeutlichung der Bo- genform der Enden,
- FIG 5: ein Kinderwagengestell nach FIG 1 mit verschie- denen Vorderradeinheiten,
- FIG 6: ein Kinderwagengestell nach FIG 1 in der Sei- tenansicht mit wiederum anderen Vorderradein- heiten nach der Erfindung,
- FIG 7: ein montiertes Brückenteil, wie es als eine Al- ternative in FIG 5 dargestellt ist, an Holm- enden, die mit Seitenholmen verbindbar sind,
- FIG 8: das in FIG 7 dargestellte Ausführungsbeispiel mit abgezogenem Brückenteil mit einer Unteran- sicht auf die Holmenden und den Querholm mit den Schnellverschlusssystemen zur Befestigung des Brückenteils,
- FIG 9: ein Brückenteil mit Arretierungseinrichtungen, an denen erfindungsgemäß Verbindungselemente angelenkt sind, mit einem einzigen Rad,
- FIG 10: eine Variante nach FIG 9 mit zwei seitlichen Radanordnungen am Brückenteil,
- FIG 11: eine Ausführungsform nach FIG 9 mit drei Rädern an dem Brückenteil,
- FIG 12: eine Variante eines Brückenteils mit angelenk- ten Verbindungselementen mit einem einzigen Rad und die ersatzweise Kombination mit einer Dop- pelradanordnung, die an einem Brückenteil vor- gesehen ist,
- FIG 13: ein anderes Kinderwagengestell mit einer Arre- tierungseinrichtung, die zugleich als Brücken- element vorgesehen ist, mit einer Einzelradan- ordnung,
- FIG 14: ein Brückenelement mit einer daran angebrachten Fußstütze und zwei Radanordnungen und
- FIG 15: ein Beispiel der Ausführung einer Arretierungs- vorrichtung ohne Außengehäuse in schematischer Darstellung.

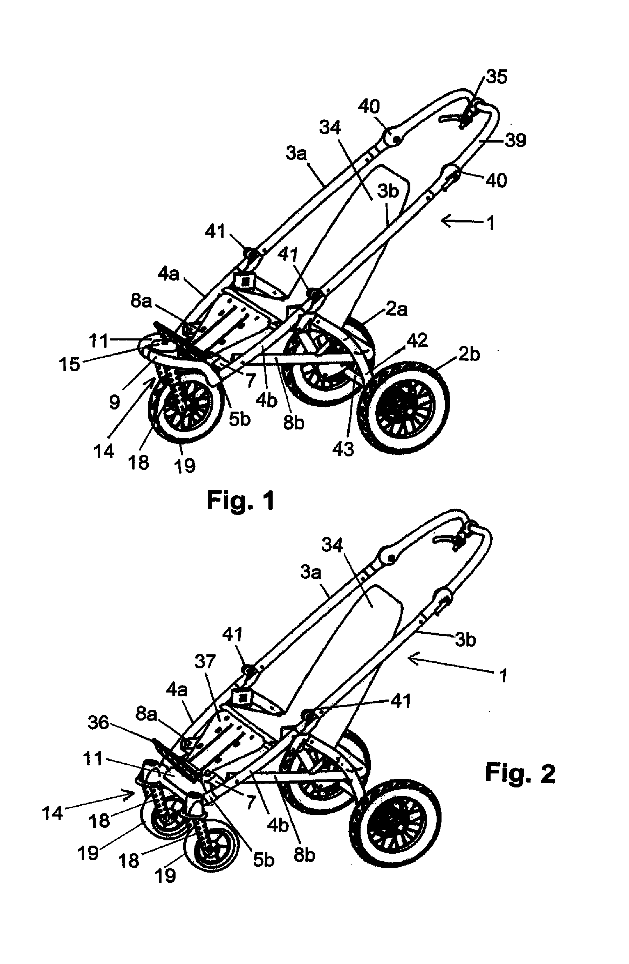

In Figur 1 ist ein Fahrgestell 1 eines Kindersportwagens dargestellt. Dieses Fahrgestell 1 weist schrägverlaufende Seitenholme 3a, 3b auf, an deren oberen Enden über Rastdrehgelenke ein Schiebebügel 39 verschwenkbar befestigt ist. Die beidseitig vorgesehenen Rastschwenkgelenke 40, die sich feststellen lassen, dienen dazu, den Schiebebügel in bestimmte Neigungswinkel zu verbringen, um eine Höhenanpassung an größere und kleinere Personen herzustellen, die den Schiebewagen vor sich herschieben. Des Weiteren kann der Schiebebügel 39 auch nach vorn verschwenkt werden, was beim Zusammenklappen des Fahrgestells 1 gewünscht ist, um beispielsweise den Kinderwagen in einem Kofferraum verstauen zu können. Zu diesem Zweck ist weiterhin ein Schwenkgelenkpaar 41 untenseitig an den Schrägholmen 3a und 3b vorgesehen, so dass auch hierüber die Seitenholme zusammengelegt werden können.

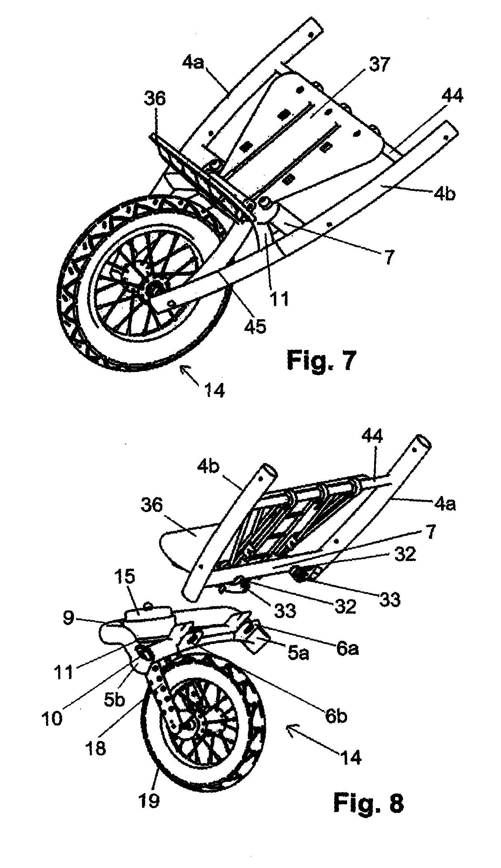

In Verlängerung zu den Seitenholmen 3a und 3b sind Holmenden 4a und 4b im Gestell vorgesehen. An diesen Holmenden 4a und 4b sind die unteren horizontalen Gestellholme 8a und 8b eines Verstärkungsbügels vorgesehen, der den Verbund im aufgestellten Zustand hält. Dieser Bügel verbindet darüber hinaus über Gelenke und zwischengefügte Gelenkstangen die hinteren Stützholme 42, an denen die Achse 43 für die hinteren Räder 2a und 2b befestigt ist, mit den Schrägholmen. Die beiden unteren Holmenden 4a und 4b sind untenseitig über einen Querholm 7 und obenseitig über einen Querholm 44 miteinander verbunden. An dem Querholm 44 ist, wie aus Figur 7 bzw. Figur 8 ersichtlich, zugleich eine Beinstütze 37 befestigt, an der untenseitig eine hochklappbare Fußraste 36 angelenkt ist. Wie aus den Detailzeichnungen in den Figuren 7 und 8 ebenfalls ersichtlich ist, sind an dem unteren Querholm 7 Arretierungsbolzen 32 vorgesehen, die Bestandteil eines Schnellverbindungssystems 33 sind. Die Arretierungsbolzen 32 werden durch die eingezeichneten umlegbaren Hebel beim Umlegen in die dargestellten Positionen gespannt. Dabei werden zugleich die Befestigungselemente 6a und 6b, nämlich Laschenpaare, kraftschlüssig befestigt, wenn diese zuvor auf die Arretierungsbolzen 32 geschoben worden sind. Die Befestigungselemente 6a und 6b sind an einem Brückenteil 11, das rahmenförmig ausgebildet ist, an dem hinteren Querholm 44 befestigt und stehen rückseitig und nach oben hervor, damit die Befestigungselemente 6a und 6b auf die Arretierungsbolzen 32 aufgeschoben werden können.

Es ist aus Figur 8 ersichtlich, dass das rahmenförmige Brückenelement 11 seitlich Stützpunkte 5a und 5b in Form von Ausnehmungen 10 aufweist. In diese werden bei der Befestigung die Enden der nach innen gebogenen Holmenden 4a und 4b hineingesteckt, so dass hierüber ein zusätzlicher Formschluss gegeben ist und das Rad 19 (Figur 8) am Brückenelement der Vorderradeinheit 14 gesichert gehalten ist. Der vorstehende Bügel 9 des Brückenteils 11 ist zugleich als Träger für die Arretierungseinrichtung 15 für den nicht dargestellten Lagerbolzen an dem Radhalter 18 vorgesehen. Die Funktion dieser Arretierungseinrichtung wird später noch beschrieben. Hier können bekannte Arretierungseinrichtungen verwendet werden.

In dem so gebildeten Fahrgestell 1 ist ein Sitzeinsatz 34 montiert, der wie die Rückenlehne umklappbar ist. Des Weiteren zeigt die Darstellung in FIG 1 am oberen Querteil des Schiebebügels, der eingezogen und praktisch wie ein flaches M ausgebildet ist, einen Handgriff 35 für eine Bremse. Die vorgegebene Form, nämlich die seitlichen Ausformungen und der mittige Einzug, an dem der Handgriff 35 befestigt ist, gewährleisten, dass der Handgriff 35 beim Ziehen der Bremse in die Ausnehmung eintauchen kann.

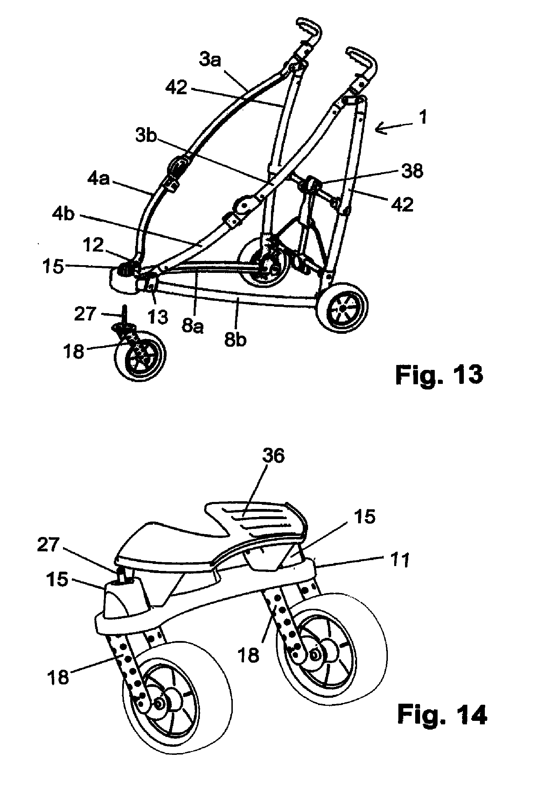

Das Ausführungsbeispiel in Figur 2 zeigt eine Variante der Vorderradeinheit nach Figur 1. Im Übrigen weist das Fahrgestell 1 die gleichen Teile auf wie das Beispiel in Figur 1. Aus diesem Grunde wird das Fahrgestell 1 nach Figur 2 hier nicht noch einmal beschrieben. An Stelle des in Figur 1 dargestellten Brückenelementes 11 der Vorderradeinheit 14 kommt hier ein Brückenelement zur Anwendung, wie es in Figur 14 dargestellt ist. An dem Brückenteil 11 befinden sich seitlich zwei Aufnahmen und Arretierungseinrichtungen 15 für die Sicherung der drehbaren Lagerbolzen 27 an dem Brückenteil der Gabel bzw. dem Radhalter. Das obenseitig vorgesehene Drehteil zur Fixierung ist in Figur 14 nicht dargestellt und auch aus Figur 2 nicht ersichtlich. Die beiden Radanordnungen, die beabstandet zueinander vorgesehen sind, können unabhängig voneinander um die im Wesentlichen vertikal verlaufende Achse des Lagerbolzens sich drehen, so dass eine Kurvennachführung beim Schieben des beräderten Gestells 1 möglich ist. FIG 14 zeigt ferner, dass an dem Brückenteil 11 zusätzlich auch eine Fußraste 36 montiert ist. Die Rückseite am Brückenteil 11 ist hier nicht dargestellt, gleichwohl ist diese aus Figur 2 ersichtlich. Es befindet sich an der Rückseite ein bogenförmiger Abschlussholm, an dem sich die Stützpunkte 5a und 5b befinden, die Ausnehmungen 10 sein können, wie in Figur 8 dargestellt. Die Befestigung des Brückenteils 11 an dem Querholm 7 erfolgt in gleicher Weise wie im Ausführungsbeispiel anhand der Figuren 1, 7 und 8 beschrieben. Der einzige Unterschied besteht nun darin, dass hier ein völlig anderes Brückenteil an denselben Elementen des Fahrgestells 1 befestigt werden kann und dass dieses zwei Radanordnungen aufweist.

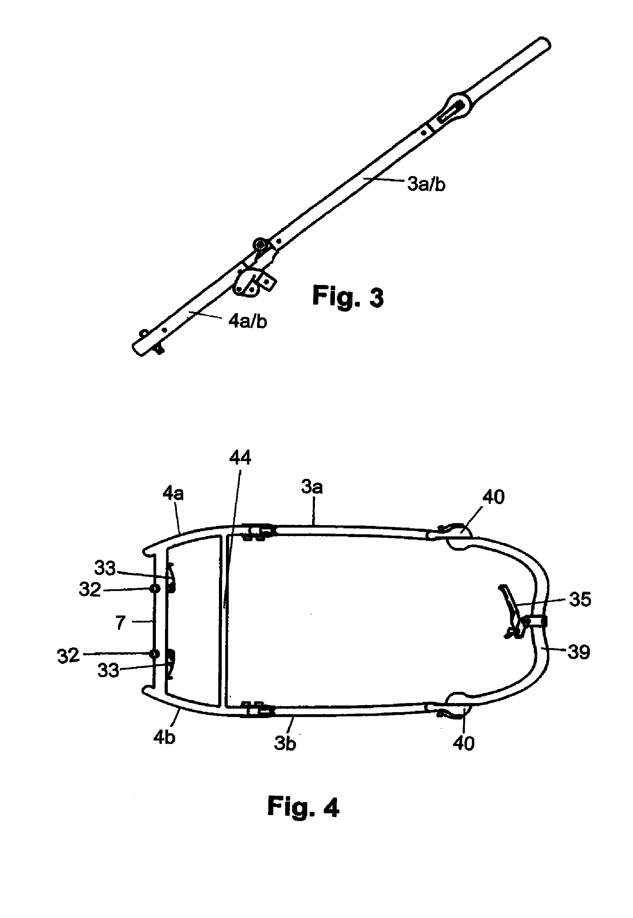

In Figur 3 sind in einer Seitenansicht die Schrägholme dargestellt und der damit gebildete Rahmen in der Draufsicht in Figur 4. Dieses Ausführungsbeispiel zeigt die unteren Holmenden 4a und 4b, die an den schrägen seitlichen Längsholmen 3a und 3b befestigt sind. Über Rastschwenkgelenke 40 ist der Schiebebügel 39 angelenkt. Untenseitig sind die Holmenden 4a und 4b über einen Querholm 7 miteinander fest verbunden. An diesem Querholm 7 befinden sich die Arretierungsbolzen 32, die an der Unterseite mit Exzenterhebeln eines Schnellverbindungssystems 33 zusammenwirken, wie sie beispielsweise auch zum Befestigen von Rädern an einem Fahrrad bekannt sind. Der darüber befindliche obere Querholm 44 dient zur Verbesserung der Stabilität, er ist aber nicht unbedingt erforderlich. Ebenso können auch an dem unteren Querholm 7 Träger befestigt sein, an denen beispielsweise eine Fußraste und/oder eine Beinstütze befestigbar ist. Die Draufsicht in Figur 4 zeigt den ovalen Verlauf sowohl im unteren als auch im oberen Bereich. Die Figur zeigt ferner, dass der Handgriff 35, der in der Mitte am Querteil des Schiebers befestigt ist, angezogen werden und dann in die durch die M-Form vorgegebenen Ausnehmungen einschwenken kann.

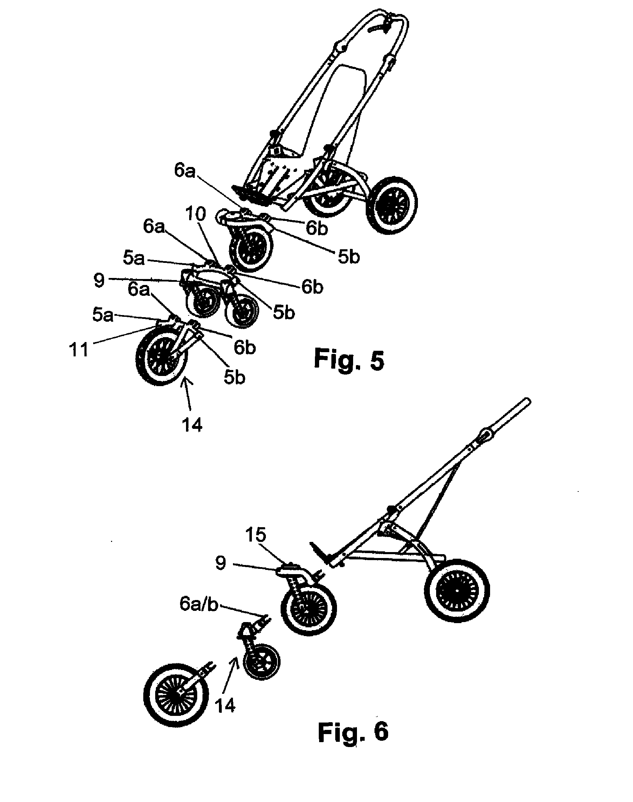

Das Ausführungsbeispiel in Figur 5 unterscheidet sich von dem in Figur 1 lediglich dadurch, dass die anfügbaren Vorderradeinheiten unterschiedlich gestaltet sein und z.B. mit denen in den Figuren 1, 2, 7 und 8 kombiniert werden können. Je nach Kundenwunsch kann also ein Fahrgestell 1 mit solchen, vorher schon beschriebenen Radeinheiten 14 bestückt werden.

In Figur 6 ist die Seitenansicht des Ausführungsbeispiels gemäß Figur 5 dargestellt. Aus der Figur ist ersichtlich, dass weitere Vorderradvarianten 14 über die Befestigungselemente 6a und 6b mit dem Querholm 7 verbindbar sind. Auch ist hier der vordere Rahmenteil 9 sichtbar, der, wie auch in Figur 1 dargestellt, abgewinkelt ausgeführt ist. Der Rahmenteil 9 ist Träger des Brückenteils 11 gemäß Figur 8. Das Ausführungsbeispiel zeigt drei unterschiedliche Einzelräder, die allesamt über das Brückenteil 11 mit dem Fahrgestell verbindbar sind.

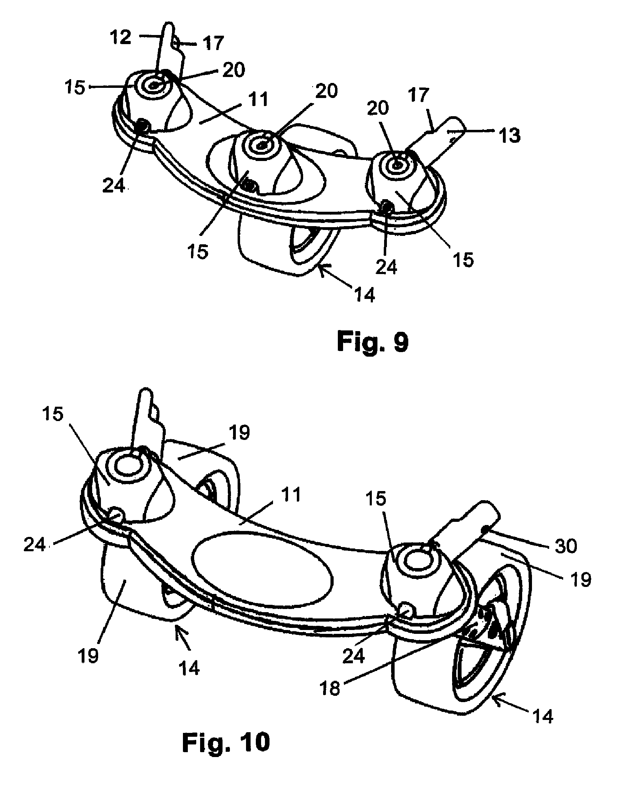

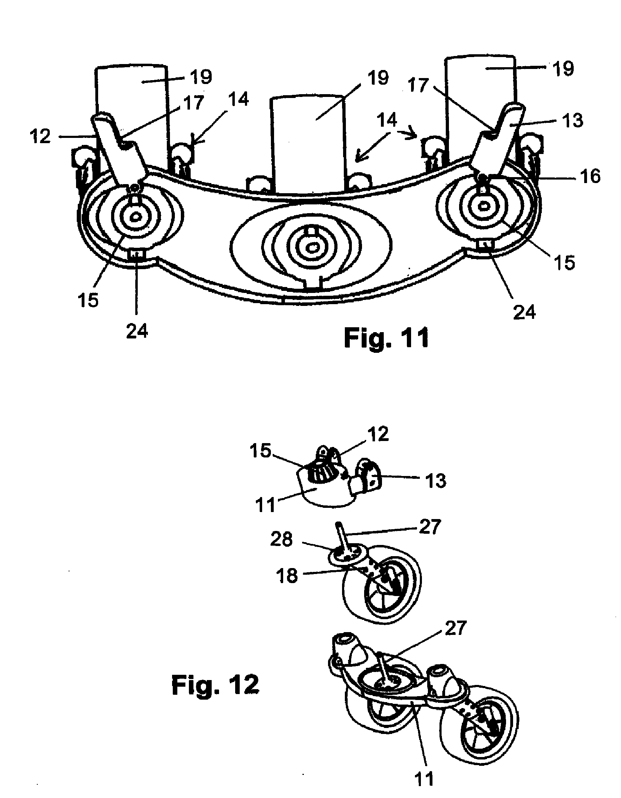

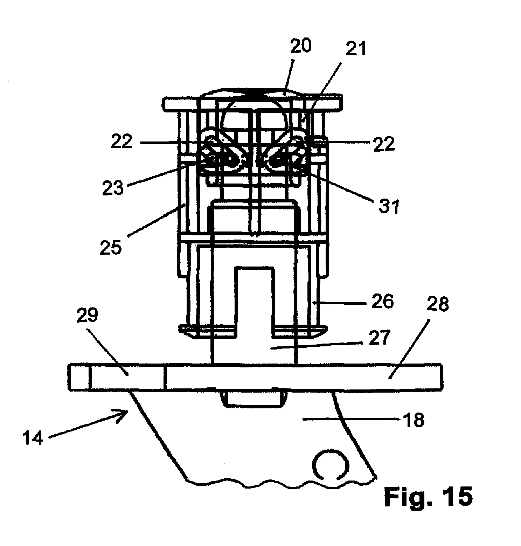

Die Ausführungsbeispiele in den Figuren 9, 10 und 11 zeigen jeweils ein Brückenteil 11, an dem in Figur 9 mittig eine Vorderradeinheit 14 befestigt ist, während in Figur 10 zwei Vorderradeinheiten 14 seitlich an dem Brückenteil 11 befestigt sind und in Figur 11 drei Vorderradeinheiten 14. Zum Zwecke der Lagerung der Vorderradeinheiten sind in dem Brückenteil 11 Durchgangsbohrungen, die nicht sichtbar sind, eingebracht. In diese Durchgangsbohrungen wird jeweils der aus Figur 15 ersichtliche Lagerbolzen 27 der Vorderradeinheit 14 von unten hindurchgesteckt und gereicht in die an der Oberseite des Brückenteils 11 befestigte Arretierungseinrichtung 15 und wird darin gegen Herausziehen des Lagerbolzens 27 gesichert. Der Lagerbolzen 27 ist an einem scheibenförmigen Träger 28 mittig angebracht, der in Figur 15 dargestellt ist. An der Trägerscheibe 28 ist der Radhalter, der Gabelform aufweist, wie aus den Figuren 9, 10 und 11 ersichtlich ist, befestigt. An den Enden der Schenkel befindet sich die Achse für das jeweilige Rad 19, das drehbar gelagert ist. Aus Figur 15 ist ersichtlich, dass der Radhalter versetzt nach hinten läuft, so dass die Drehachse des jeweiligen Rades 19 gegenüber dem Lagerbolzen 27 versetzt ist, wodurch die Räder sich automatisch beim Schieben ausrichten und die Drehachse der Räder 19 hinter der senkrechten Schwenkachse des Lagerbolzens 27 liegt. Aus den Figuren 9 bis 11 ist ferner ersichtlich, dass die Arretierungseinrichtungen 15 immer gleich gestaltet sind, gleich ob diese nun mit einer Vorderradeinheit 14 bestückt sind oder nicht. Des Weiteren ist ersichtlich, dass die außen vorgesehenen Arretierungseinrichtungen 15 zusätzlich mit Verbindungselementen 12 und 13 versehen sind, die an den Arretierungseinrichtungen 15 mittels Schwenkachsen 16, wie aus Figur 11 ersichtlich, angelenkt sind. Diese Verbindungselemente 12 und 13 sind gegenläufig spiegelbildlich angeordnet und bestehen aus einem Aufnahmeabschnitt 17 und einem unteren Befestigungsabschnitt mit dem Gelenk. Ihre Ausrichtung ist durch die Achsenposition vorgegeben. Die Ausrichtung ist so gewählt, dass die Verbindungselemente an die Holmenden 4a, 4b eines Fahrgestells 1 eines Schiebewagens, wie Kinderwagen, Kindersportwagen, Puppenwagen, und/oder Lasttransportmittels von außen angedrückt werden können. Die Holmenden 4a, 4b liegen dann in den schalenförmigen Aufnahmen 17 und können mittels Schrauben, die in die Bohrungen 30 und durch Bohrungen in den Holmen des Fahrgestells eingeführt werden, an diese angeschraubt werden, wodurch ein sicherer Halt gegeben ist. Es ist ersichtlich, dass durch diese erfindungsgemäß vorgesehenen Verbindungselemente 12 und 13 eine Anbindung auch an gebogene Holme auf einfache Weise möglich ist. Wenn diese Holme V-förmig zulaufen, so braucht nur an eine Arretierungseinrichtung 15 oder einem Mittenstück des Brückenteils 11 eine Verbindung mit den Holmen hergestellt zu werden. Hierzu können die Verbindungselemente 12 und 13 an die mittige Arretierungseinrichtung 15 oder seitlich davon am Brückenteil 11 angelenkt sein. Das Brückenteil 11 kann in diesem Fall auch so verkürzt ausgeführt werden, dass nur das mittige Rad an ihm befestigt ist.

Die Arretiereinrichtung 15 weist, wie Figur 15 in schematischer Darstellung zeigt, eine Lagerhülse 25 auf, in der ein Druckknopf 20 verschieblich gelagert ist. Der Druckknopf ist hülsenförmig ausgebildet und weist aber nur am Umfang verteilt einige Hülsenabschnitte auf, an denen gegenüberliegend, V-förmig nach unten zulaufende, schräge Führungsschlitze 22 in Wandabschnitten vorgesehen sind. Diese schrägen Führungsschlitze 22 sind auf beiden Seiten angeordnet und kreuzen sich mit Horizontalschlitzen 23, die an Wänden der feststehenden äußeren Lagerhülse 25 befestigt und nach innenstehend eingebracht sind, so dass an den Kreuzungspunkten Lagerstellen für Sicherungsstäbchen 31 oder Sicherungsfedern gegeben sind. Durch Druck auf den Druckknopf 20 werden die Sicherungsstäbchen 31 zwangsweise in den horizontalen Führungsschlitz 23 verschoben. Gleichzeitig drückt die Unterseite des Druckknopfes auf den Kopf des Lagerbolzens 27, so dass dieser nach unten bewegt wird und die Vorderradeinheit 14 abgezogen werden kann. Die Lagerhülse 25 ist ferner an einem Fixierteil 26 befestigt, das von unten in die Öffnung des Gehäuses der Arretierungseinrichtung eingesetzt wird, das nicht dargestellt ist, aber aus den übrigen Figuren sich als formangepasstes Gehäuse ergibt. Des Weiteren ist aus den Figuren 9, 10 und 11 ersichtlich, dass vorderseitig an den Arretierungseinrichtungen 15 Schieber 24 vorgesehen sind. Diese Schieber wirken mit einem nicht dargestellten Arretierungszapfen zusammen, der bei Bedarf in die Bohrung 29 in den scheibenförmigen Träger hineingeschoben wird, wodurch eine Drehung der Vorderradeinheit blockiert wird. Das Widerlager des Bolzens besteht aus einer Bohrung in dem Brückenteil 11. Je nach Wunsch können also die Vorderradeinheiten bei Ausrichtung parallel zur Längsachse des Fahrgestells arretiert werden, so dass ein gerader Auslauf ermöglicht wird. Ist eine Kurvenfahrt gewünscht, kann diese Arretierung durch Hochziehen des Schiebers aufgehoben werden, so dass die Vorderradeinheiten sich automatisch aufgrund ihrer exzentrischen Ausführung ausrichten können.

In Figur 12 ist das Ausführungsbeispiel eines einteiligen Brückenteils 11 dargestellt. Dieses Brückenteil 11 besteht aus einem Gehäuseteil, das zugleich die Arretierungseinrichtung 15 ist. Der obige Kopf der Arretierungseinrichtung 15 ist drehbar ausgeführt. Die beiden Verbindungselemente 12 und 13, die verschwenkbar angelenkt sind, weisen zwei gabelförmige Halter auf, mit denen sie an Seitenholmen 3a und 3b des Gestells oder an den Holmenden 4a und 4b oder den Enden der Horizontalholme 8a, 8b befestigt werden können. Die Darstellung zeigt ferner, dass in das Brückenteil 11 der Lagerbolzen 27 des Radhalters 18 von unten hineingesteckt und durch die Arretierungseinrichtung 15 gehalten werden kann. Das Einzelrad ist durch eine Zweiradausführung ersetzbar, die darunter gezeichnet ist. Es sind die gleichen Mittel einsetzbar, um die Kombination fahrsicher zu gestalten, so dass der Lagerbolzen 27, der an dem Brückenteil 11 vorsteht, direkt in die Aufnahme der Arretierungseinheit 15 eingeführt werden kann. Die Befestigung an den Schrägholmen 3a und 3b bzw. den Holmenden 4a und 4b oder den Enden der Horizontalholme 8a, 8b, wie in Figur 13 dargestellt, erfolgt wiederum durch Festschrauben der an den Verbindungselementen 12 und 13 vorgesehenen Halter.

Das in Figur 13 dargestellte Ausführungsbeispiel eines Fahrgestells 1 weicht von den Fahrgestellen nach Figuren 1 und 2 ab. Es weist wesentlich höhere Stützholme 42 auf, zwischen denen zugleich ein Faltmechanismus eingefügt ist, bei dessen Betätigung das Fahrgestell zusammengeklappt werden kann, und zwar sowohl in Längsrichtung als auch in der Höhe. Dies ermöglichen die an der Arretierungseinrichtung 15 verschwenkbar angelenkten Verbindungselemente 12 und 13, an denen nicht nur die schrägen Holmenden 4a und 4b angelenkt sind, sondern an denen auch die unteren horizontalen Holme 8a und 8b angelenkt sein können. Die abgesetzte Radanordnung mit dem Radhalter 18 zeigt, dass auch diese Radanordnung ausgetauscht werden kann, beispielsweise gegen die in Figur 12 dargestellte Radanordnung mit zwei seitlichen Rädern.

### Bezugszeichenliste

- 1: Fahrgestell
- 2a: Rad (hinten)
- 2b: Rad (hinten)
- 3a: Seitenholm
- 3b: Seitenholm
- 4a: Holmenden
- 4b: Holmenden
- 5a: Stützpunkte
- 5b: Stützpunkte
- 6a: Befestigungselement
- 6b: Befestigungselement
- 7: Querholm
- 8a: Gestellholm (horizontal)
- 8b: Gestellholm (horizontal)
- 9: Rahmenteil
- 10: Ausnehmung
- 11: Brückenteil
- 12: Verbindungselement
- 13: Verbindungselement
- 14: Vorderradeinheit
- 15: Arretierungseinrichtung
- 16: Achsen
- 17: Aufnahme
- 18: Radhalter
- 19: Rad
- 20: Druckknopf
- 21: Hülse
- 22: schräge Führungsschlitze
- 23: horizontale Führungsschlitze
- 24: Schieber
- 25: Lagerhülse
- 26: Fixierteil
- 27: Lagerbolzen
- 28: scheibenförmiger Träger

- 29: Bohrung
- 30: Bohrung
- 31: Sicherungsstäbchen
- 32: Arretierungsbolzen
- 33: Schnellverbindungssystem
- 34: Einsatz
- 35: Handgriff
- 36: Fußraste
- 37: Beinstütze
- 38: Faltmechanismus
- 39: Schiebebügel
- 40: Rastschwenkgelenk
- 41: Schwenkgelenk
- 42: Stützholme
- 43: Achse
- 44: Querholm
- 45: Gabel

## Patentansprüche

1. Vorderradeinheit für einen Kinderwagen, Kindersportwagen, Puppenwagen und/oder für ein Lasttransportmittel mit am Fahrgestell (1) rückseitig mindestens zwei beabstandet voneinander angeordneten Rädern (2a, 2b) und mit vorderseitig einem mindestens zwei Seitenholme (3a, 3b; 4a, 4b) verbindenden Brückenteil (11), an dem die Vorderradeinheit (14) befestigt ist, **dadurch gekennzeichnet,**
**dass** das Brückenteil (11) über zwei zur Mittenlängsachse des Fahrgestells (1) symmetrisch versetzt angeordnete, um Achsen verschwenkbare Verbindungselemente (12, 13) mit den Holmenden (4a, 4b) verbunden ist, wobei die Achsen in einem bestimmten Winkel quer oder senkrecht zu den Holmenden (4a, 4b) verlaufen, die unter Berücksichtigung der Befestigungspunkte eine Formschlussverbindung zwischen den jeweiligen Holmende (4a, 4b) und dem Verbindungselement (12, 13) über einen definierten Abschnitt ermöglichen, oder
**dass** am Brückenteil (11) rückseitig mindestens ein Befestigungselement (6a, 6b) vorgesehen ist, das kraftschlüssig an einem die Holmenden (4a, 4b) im Endabschnittsbereich verbindenden Querholm (7) des Fahrgestells (1) lösbar befestigbar ist,
wobei Stützpunkte (5a, 5b) für die definierte Anlage der Holmenden (4a, 4b) an dem Brückenteil (11) vorgesehen sind, die durch konturenangepasste Ausnehmungen (10) zur Aufnahme der Enden der Holmenden (4a, 4b) oder durch konturenangepasste Ansätze, die ausrichtend in die Endabschnitte der hohlen Holmenden (4a, 4b) eingreifen, realisiert sind.

2. Vorderradeinheit nach Anspruch 1, **dadurch gekennzeichnet, dass** das Brückenteil (11) mindestens eine Bohrung für einen nach oben vorstehenden Lagerbolzen an der Vorderradeinheit (14) aufweist, dass an dem Lagerbolzen eine ringförmige Sicherungsausnehmung oder ein Sicherungsansatz vorgesehen ist, mittels derer der Lagerbolzen in einer Arretiereinrichtung (15) an dem Brückenteil (11) lös- und drehbar fixiert ist, und dass die Schwenkachsen (16) für die Verbindungselemente (12, 13) an einer zentral vorgesehenen Arretiereinrichtung (15) seitlich oder an dem Brückenteil (11) seitlich der Arretiereinrichtungen (15) vorgesehen sind.

3. Vorderradeinheit nach Anspruch 2, **dadurch gekennzeichnet, dass** die Schwenkachsen (16) der Verbindungselemente (12, 13) symmetrisch nahe zur Mittenlängsachse des Fahrgestells oder symmetrisch nahe der Bohrung angeordnet sind und zu den Holmen, an denen sie angebracht sind, eine Verlängerung bilden.

4. Vorderradeinheit nach Anspruch 1, 2 oder 3, **dadurch gekennzeichnet, dass** jeweils zwei Verbindungselemente (12, 13) über- oder nebeneinander vorgesehen sind, die jeweils mit den Enden unterer Gestellholme (8a, 8b) und schräg verlaufender oberer Gestellholme (3a, 3b bzw. 4a, 4b) verbindbar sind.

5. Vorderradeinheit nach einem der vorhergehenden Ansprüche, **dadurch gekennzeichnet, dass** die Verbindungselemente (12, 13) in die Holmenden (4a, 4b) einsteckbar oder mittels Hülsen aufsteckbar und mit Federsicherungselementen oder Schraubsicherungen an den Holmen (3a, 3b bzw. 4a, 4b) befestigt sind.

6. Vorderradeinheit nach einem der Ansprüche 2 bis 5, **dadurch gekennzeichnet, dass** an den Verbindungselementen (12, 13) Lagerhalter vorgesehen sind, die Aufnahmen (17) zum Einlegen der Holmenden (4a, 4b) aufweisen, und dass die Holmenden (4a, 4b) hieran mittels Schraub-, Rast- oder Nietverbinder befestigt sind.

7. Vorderradeinheit nach einem der vorhergehenden Ansprüche, **dadurch gekennzeichnet, dass** die Holmenden (4a, 4b) der Gestellholme V-förmig oder parabelförmig gebogen zur Längsachse des Fahrgestells verlaufen und dass die Verbindungselemente (12, 13) eine solche Formanpassung aufweisen, dass sie in diese einschiebbar, mit Hülsen versehen aufschiebbar oder daran anliegend befestigbar sind.

8. Vorderradeinheit nach Anspruch 1, **dadurch gekennzeichnet, dass** die Holmenden (4a, 4b) die Enden der Schrägholme (3a, 3b) oder der horizontalen Verbindungsholme (8a, 8b) des Fahrgestells (1) sind, dass diese Enden mit den schrägverlaufenden Holmen (3a, 3b) vorderseitig oder über ein zwischengefügtes Verbindungsteil mit dem Brückenteil (11) oder an der Arretierungseinrichtung (15) schwenkgelenkig verbunden sind und dass die V-förmig oder parabelförmig nach hinten sich öffnenden Schwenkholme (3a, 3b) und über Stützholme (42) sich mindestens an den Verbindungsholmen (8a, 8b) abstützen, die Radlagerhalter für Hinterräder aufweisen.

9. Vorderradeinheit nach Anspruch 8, **dadurch gekennzeichnet, dass** an den Verbindungsteilen Aufnahmen oder Ansätze vorgesehen sind, an die die Verbindungselemente (12, 13) ankoppelbar sind.

10. Vorderradeinheit nach Anspruch 1 oder 2, **dadurch gekennzeichnet, dass** die Vorderradeinheit (14) einen gabelförmigen oder einen einschenkligen Radhalter (18) aufweist, zwischen dessen beiden Schenkeln oder an dessen einem Schenkel mindestens ein Rad (19) drehbar gelagert ist, und dass der Radhalter (18) fest an dem Brückenteil (11) oder über den Lagerbolzen (27) oder eine andere Kupplungseinheit oder in der Arretierungsvorrichtung (15) drehbar befestigt ist.

11. Vorderradeinheit nach Anspruch 10, **dadurch gekennzeichnet, dass** am Radhalter (18) oder an dem Lagerbolzen (27) oder am Brückenteil (11) eine Lager-und/oder Fixierscheibe angebracht ist oder die anderen Kupplungseinheiten ein solche aufweisen, die sich an Lagerflächen der korrespondierenden Teile abstützt, und dass beidseitig zur Aufnahme oder Bohrung für den Lagerbolzen (27) je ein Arretierungselement oder Arretierungsschieber (24) vorgesehen ist.

12. Vorderradeinheit nach Anspruch 1, **dadurch gekennzeichnet, dass** das Brückenteil (11) mit der Radeinheit gegen eine einzelne Vorderradeinheit (14) mit starrer Gabel oder ein anderes Brückenteil (11) mit einer oder mehreren Radanordnungen austauschbar ist.

13. Vorderradeinheit nach Anspruch 2, **dadurch gekennzeichnet, dass** die Arretierungseinrichtung aus einem an dem Brückenteil (11) befestigten oder auf den Lagerbolzen (27) als Arretierungseinrichtung (15) aufgesteckten Drehkörper besteht, der durch relative Verdrehung und Mitkopplung mindestens ein darin vertikal verschiebbar gelagertes stiftförmiges Arretierungselement ausfährt oder einzieht, das eine Zahnstange aufweist, in die mindestens ein Schraubengang an der Innenseite eines Drehteils des Drehkörpers mindestens abschnittsweise eingreift, und dass das Arretierungselement durch eine Bohrung im Brückenteil (11) hindurch in eine Arretierungsausnehmung in den Träger (28) zur Arretierung der Geradeausrichtung des Rades (9) greift.

14. Vorderradeinheit nach Anspruch 1, **dadurch gekennzeichnet, dass** das Brückenteil (11) als Rahmenteil ausgebildet ist, einen vorderen Rahmenteil (9), der im Wesentlichen geradlinig ausgeführt ist, und einen hinteren Rahmenteil aufweist, der gebogen ausgeführt ist und an seiner Rückseite Laschen als Befestigungselemente (6a, 6b) aufweist, die in Wirkverbindung mit Arretierungsbolzen (32) eines Schnellverbindungssystems (33) stehen oder angeschraubt sind.

15. Vorderradeinheit nach Anspruch 1, **dadurch gekennzeichnet, dass** die Seitenholme (3a, 3b) untere Holmendabschnitte (4a, 4b) aufweisen, die Bestandteil eines V-förmigen austauschbaren Anfügeteils sind, an dem das Brückenteil (11), eine Arretierungseinrichtung (15) und eine Fußraste (36) und/oder eine Beinstütze (37) vorgesehen sind.
